Europäisches Patentamt

European Patent Office

Office européen des brevets

(19)

(11) Publication number:

**0 325 435**
**A2**

# EUROPEAN PATENT APPLICATION

(12)

(21) Application number: **89300461.4**

(22) Date of filing: **18.01.89**

(51) Int. Cl.4: **G 01 M 11/00**

(30) Priority: **21.01.88 US 146642**

(43) Date of publication of application:
**26.07.89 Bulletin 89/30**

(84) Designated Contracting States: **DE FR GB**

(71) Applicant: **Hewlett-Packard Company**
**3000 Hanover Street**
**Palo Alto California 94304 (US)**

(72) Inventor: **Wong, Roger W.**
**1455 White Oak Drive**
**Santa Rosa California 95409 (US)**

**Vifian, Hugo**
**3030 Tera Linda Drive**
**Santa Rosa California 95404 (US)**

**Hart, Michael G.**
**2597 Vallejo Street**
**Santa Rosa California 95404 (US)**

(74) Representative: **Williams, John Francis et al**
**J.F. Williams & Co 34 Tavistock Street**
**London WC2E 7PB (GB)**

(54) **Method and apparatus for locating discontinuities in optical transmission media.**

(57) A lightwave component measurement system incorporates a transform capability that converts data measured in the modulation frequency domain to the time or distance domain to locate discontinuities or terminations with high resolution. The system comprises a modulation source (20), an electrical power splitter (22), a lightwave source 14, an optical splitter/combiner (26), connected to a device under test (DUT) and a lightwave receiver (16), and a tuned vector receiver 24. The incident and reflected waves are added to give frequency-domain information, which is subjected to an inverse Fourier transform to calculate time-domain data. The system can measure the magnitude and distance to each discontinuity, as well as the length of an optical transmission medium, such as an optical fiber cable.

EP 0 325 435 A2

## Description

### METHOD AND APPARATUS FOR LOCATING DISCONTINUITIES IN OPTICAL TRANSMISSION MEDIA

This invention relates to electronic test instruments and, more particularly, to instrumentation for testing fiber optic systems and components. Specifically, the invention is directed to electronic test instruments for testing the continuity of elements of fiber optic systems, such as optical fiber cable.

Typical optical components of fiber optic systems include optical fiber cable, modulators, and passive devices, such as switches, splitters, combiners, and attenuators. Various test systems for testing these devices are known. The input and output signals for testing the devices are light, and the key parameters measured are attenuation versus modulation frequency, modulation bandwidth, delay, modal pulse dispersion, electrical length, and location of discontinuities.

Typically, discontinuities in fiber optic systems are located by a technique known as "optical-time-domain reflectometry" (OTDR). The test system is initially connected to the optical component to be tested. The first step of the OTDR technique is to generate a time-domain optical pulse. This pulse is applied to the optical component and is transmitted through the component until the terminus of the component is reached or, alternatively, until a discontinuity is encountered. A portion of the pulse is reflected at the termination or a discontinuity in the optical component and is transmitted back to the test instrument. The test instrument operates to sense the Raleigh back scatter to detect the reflected pulse energy.

A few test system manufacturers claim to be able to resolve multiple reflections which are spaced at distances on the order of less than or equal to 5 cm. However, the measurement dynamic range of their equipment is limited. For example, although one manufacturer claims to resolve multiple reflections down to 1 mm spacing, the measurement dynamic range in terms of optical power is 30 dB.

Also, because the OTDR technique is employed to test long lengths of optical fiber cable and, also, because of inherent limitations on the amount of pulse energy which can be pumped into the cable, the test system typically has a high sensitivity so that remote discontinuities can be detected. Unfortunately, this results in "dead zones" where discontinuity measurements cannot be made. These dead zones result when the pulse energy reflected from less remote discontinuities saturates the test system detector. Accordingly, it is desirable to avoid the dead zone problem characteristic of the OTDR technique.

In accordance with the preferred embodiment of the invention, a test system in the form of a lightwave component measurement system is provided which incorporates a transform capability that converts data measured in the modulation frequency domain to the time or distance domain. This is similar in concept to optical-time-domain reflectometry (OTDR) but very different in its implementation and in its results.

The time-domain data are both stable and accurate, since they are calculated from highly-stable, highly-precise frequency-domain information. One embodiment of the invention provides optical reflection measurement capability which allows the resolution of multiple reflections which are closely spaced. The lightwave component measurement system in accordance with the invention has a broad measurement dynamic range (typically 45 dB) with multiple reflection resolution capability of 5 cm. The time-domain transform capability in the lightwave component measurement system allows a reflection to be located to millimeters, and resolution of multiple discontinuities just centimeters apart. This also enables precise measurement of optical fiber cable length.

The lightwave component measurement system in accordance with the invention has a greater dynamic range than typical test systems which employ the OTDR technique. The measurements are also free from the dead zones of traditional OTDR techniques.

The above and other features of the invention and the concomitant advantages will be better understood and appreciated by persons skilled in the field to which the invention pertains in view of the following description given in conjunction with the accompanying drawings. In the drawings:

Fig. 1 is a block diagram of a lightwave component measurement system incorporating optical transmission medium discontinuity location and length measurement in accordance with one embodiment of the invention;

Fig. 2 is block diagram of the lightwave component measurement system shown in Fig. 1 configured for measuring optical reflections to locate a discontinuity or measure length;

Fig. 3 is a diagram which illustrates generation and propagation of an optical signal during location of a discontinuity or length measurement;

Fig. 4, comprising Figs. 4A and 4B, illustrates transformation from frequency domain data to time or distance domain data associated with the discontinuity location and length measurement method of the invention;

Fig. 5 is a diagram of a length of optical fiber cable to aid an explanation of one embodiment of a method in accordance with the invention for locating discontinuities and measuring length; and

Fig. 6, comprising Figs. 6A and 6B, shows an optical reflection measurement in accordance with the method of the invention for locating discontinuities and measuring length, in which return loss, in dB, is shown in the modulated frequency domain (Fig. 6A) and in the time domain (Fig. 6B); and

Fig. 7 is a flowchart for selecting and performing a distance and magnitude measurement in accordance with the method of the invention.

The invention generally relates to a method and apparatus for frequency domain measurements and the use of inverse Fourier transforms for the resolution of single or multiple optical reflections in optical fiber cable or in open beam at discontinuities given by changes in the effective index of refraction in an optical transmission medium. The theory of operation for locating one or more discontinuities and/or measuring the length of optical fiber components will be described in detail below.

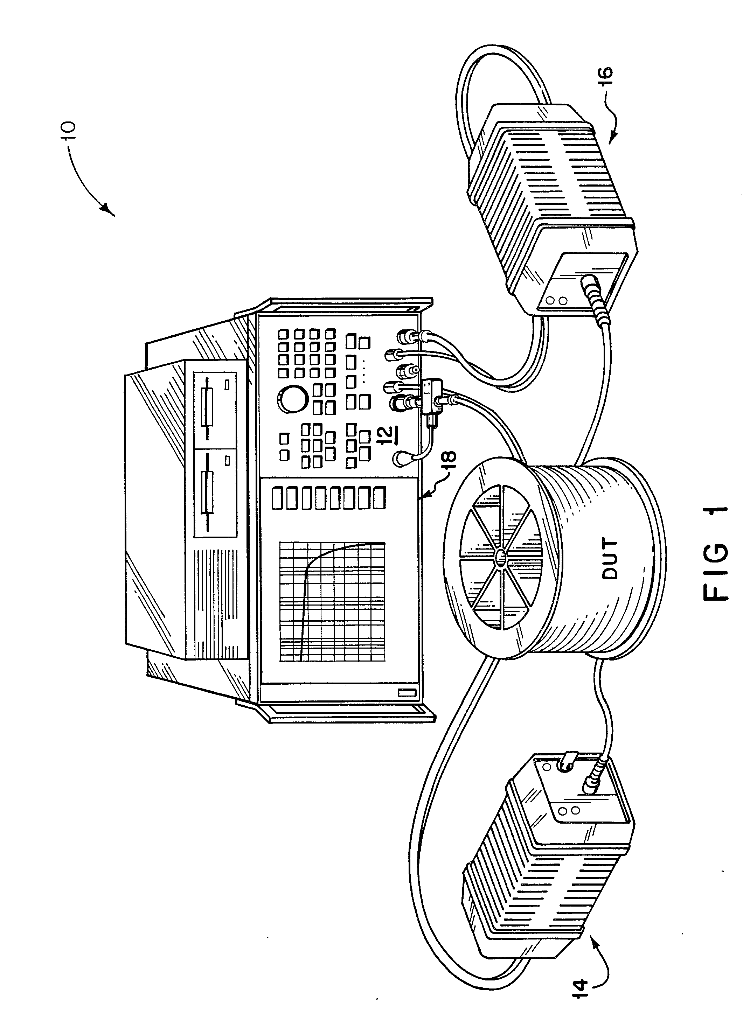

Fig. 1 shows a lightwave component measurement system, generally indicated by the numeral 10. Its principal elements are a lightwave component analyzer 12, a lightwave source 14, and a lightwave receiver 16. All of the elements of the lightwave component measurement system 10, including the lightwave source 14 and the lightwave receiver 16, are extensively characterized to achieve high levels of precision in lightwave measurements. Fig. 1 also shows a device under test (DUT), for example, a spool of optical fiber cable, connected to the lightwave component measurement system 10.

The lightwave component analyzer 12 preferably comprises essentially a 3 GHz vector network analyzer, for example, an HP8753 vector network analyzer available from Hewlett-Packard Company, Network Measurements Division, Santa Rosa, California, specifically tailored for lightwave measurements. It provides 300 kHz to 3 GHz test signals used to modulate either a single-mode or multi-mode lightwave source 14 preferably operating at 1300 nm.

The electro-optical characteristics of the lightwave source 14 and the opto-electrical characteristics of the lightwave receiver 16 in a test setup have to be sensitive, stable, and repeatable. Also, their modulation bandwidths need to be wider than that of the DUT. The lightwave source 14 and the lightwave receiver 16 have the following performance characteristics.

The lightwave source 14 provides a modulation signal source which preferably generates a high-stability, 1 Hz-resolution synthesized signal that can be swept from 300 kHz to 3 GHZ. The lightwave source 14 can be a single-mode or multi-mode lightwave source which incorporates stable laser diodes as 1300 nm light sources with narrow, clean spectra. Modulation bandwidth of the lightwave source 14 is 3 GHz, with better than +/-3.0 dB flatness. This can be significantly improved when optical measurement calibration techniques preferably incorporated in the lightwave component analyzer 12 are used. The optical dynamic range of the lightwave source 14 is typically 40 dB or more. The intensity-modulated light signal from the lightwave source 14 is applied to the DUT.

The lightwave receiver 16 is a high-stability, high-resolution precision receiver with 100 dB dynamic range which allows measurements over a wide dynamic range and enables the lightwave component measurement system 10 to operate with an optical sensitivity of -40 dBm. The lightwave receiver 16 operates with both single-mode and multi-mode optical fiber cables. Its optical detector is preferably a PIN photodiode. The lightwave receiver 16 has a modulation bandwidth that preferably extends to 3 GHz, with +/-4 dB flatness to 2 GHz, rolling off to -14 dB at 3 GHz. As with the lightwave source 14, the flatness of the lightwave receiver 16 is also improved significantly when the optical measurement calibration techniques are used. Minimum detectable optical signal (for modulations up to 2 GHz) is -40 dBm, and the typical optical dynamic range exceeds 40 dB. The 3 GHz modulation bandwidths of the lightwave source 14 and the lightwave receiver 16 provide ample margin for typical tests.

The lightwave receiver 16 demodulates the modulated light signal for processing in the lightwave component analyzer 12. The transmission and reflection characteristics of the DUT are then displayed, preferably on a cathode ray tube (CRT) 18 included in the lightwave component analyzer 12. The transmission and reflection data can be displayed either as a function of the RF modulation frequency or as a function of RF power, time, or distance.

The lightwave component measurement system 10 measures modulation (demodulation) bandwidth, modulation (demodulation) transfer functions, loss, delay, dispersion, and reflections of lightwave system components, such as modulators, demodulators, optical fiber cables, and fiber components, based on frequency domain measurements. For optical components (such as optical fiber cable, couplers, and connectors), the lightwave component measurement system 10 can measure such parameters as modulation bandwidth, optical insertion loss, pulse dispersion, optical reflections, and length. The lightwave component analyzer 12 has the following reflection measurement uncertainty:

| Magnitude | +2.5 dB |
| | -3.7 dB |
| Dynamic range | 40 dB |

In accordance with the invention, single and multiple reflections can be resolved in time and distance with very high resolution. This enables precise location of one or more discontinuities and measurement of optical fiber cable length.

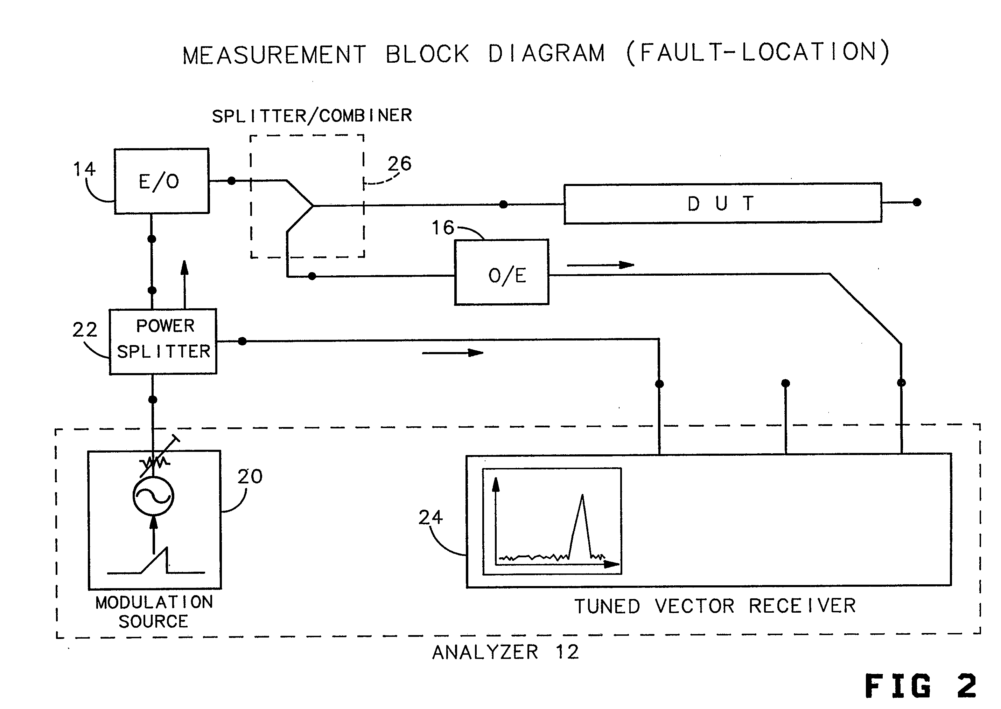

Fig. 2 shows a conceptual block diagram for measuring single and/or multiple optical reflections in an optical waveguide, such as optical fiber cable and/or in an open beam environment (DUT). Optical reflections are measured at any interface where there is a change in the index of refraction of the optical transmission medium. In accordance with the method of the invention, both the magnitude and location of the optical reflection(s) are measured.

Fig. 2 is a block diagram of the lightwave component measurement system 12 configured for measuring optical reflections to locate a discontinuity or measure length. The lightwave component analyzer 12 includes a modulation source 20 which generates a 300 kHz to 3 GHz electrical signal. The electrical signal is input to a power splitter 22 which feeds a selected portion of the electrical signal generated by the modulation source 20 to an electro-optical (E/O) transducer in the form of the lightwave source 14. Another portion of the electrical signal generated by the modulation source 20 is fed as a reference signal to one input port of a tuned vector receiver 24 included in the lightwave component analyzer 12.

The lightwave source 14 converts the electrical signal generated by the modulation source into an optical signal. The optical signal produced by the lightwave source 14 is input to an optical signal splitter (combiner) 26 which feeds a portion of the optical signal produced by the lightwave source to an optical transmission medium (DUT) and another portion to an opto-electrical (O/E) transducer in the form of the lightwave receiver 16.

The lightwave receiver 16 reconverts the received optical signal to an electrical signal. The electrical signal produced by the lightwave receiver 16 is fed to another input port of the tuned vector receiver 24.

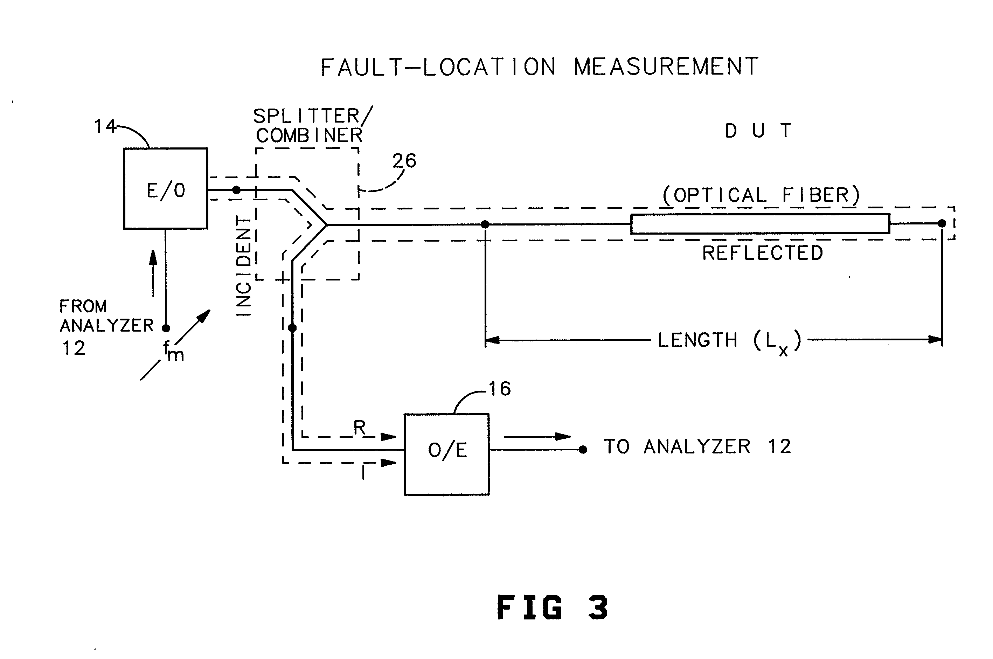

The basic operation is that an optical signal separation device siphons off incident and reflected lightwaves; Fig. 2 and the simplified block diagram of Fig. 3 show the optical signal splitter/combiner 26, as an example of optical signal separation device connected to the lightwave source 14 and the lightwave receiver 16, although the basic operation applies to other signal separation devices, such as beam splitters, optical couplers, etc.

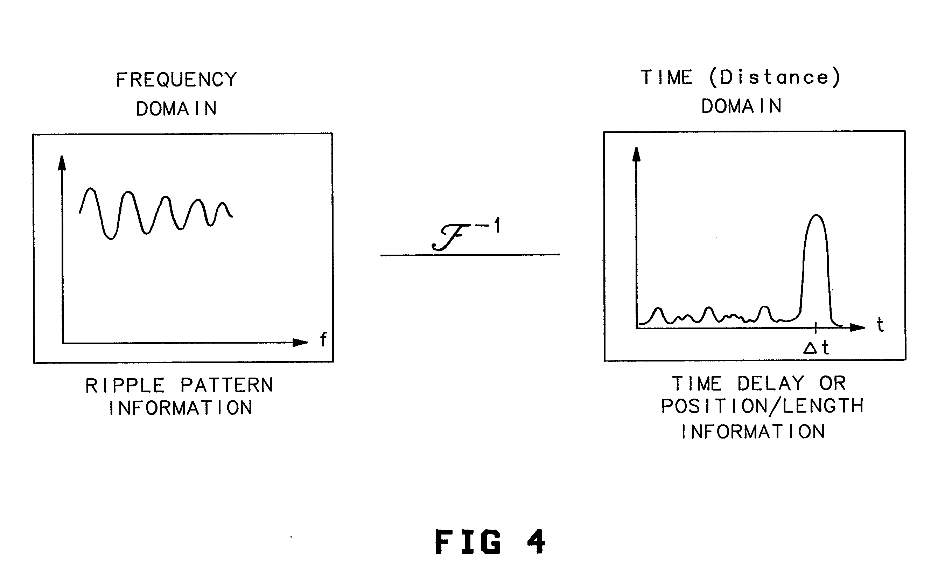

As shown in Fig. 3, incident (I) and reflected (R) modulated lightwaves are produced. These lightwaves add vectorially to form an amplitude varying "ripple" pattern versus the modulation frequency. Fig. 3 shows how the incident and reflected signals add vectorially, and Fig. 4A shows a conceptual example of the "ripple" pattern.

The periodicity and amplitudes of each of the ripple components shown in Fig. 4A contain distance (length) and magnitude information of discontinuities along or length of a given optical transmission medium, an optical fiber cable, for example. With reference to Fig. 4, by performing an inverse Fourier transform on the modulation frequency amplitude and phase data, the location of each reflection (i.e., discontinuity or length) is revealed, as shown in Fig. 4B.

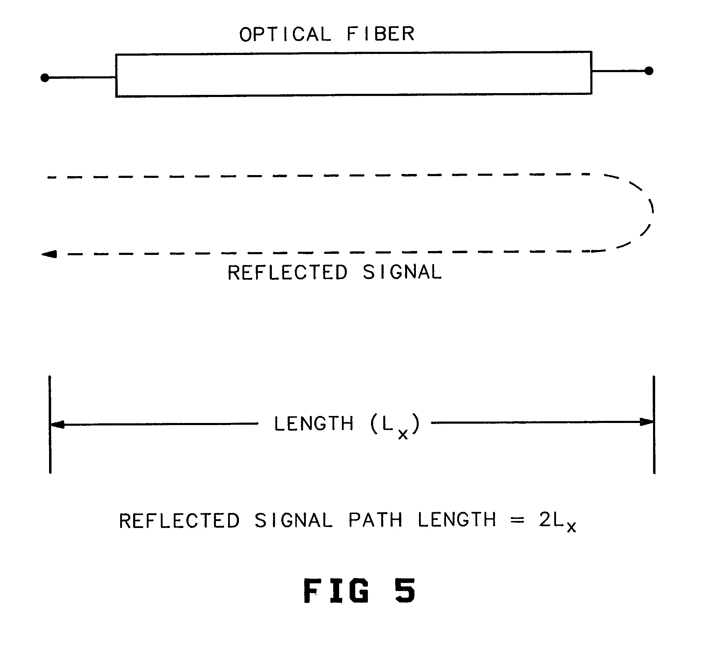

Fig. 5 shows the method in accordance with the invention used to measure a given length of an optical fiber cable. There is a ripple with one periodic frequency whose period corresponds to a time delay equal to twice the electrical length of the cable, i.e., $T = 2L_x * 1nsec/30cm$. Accordingly, the length of the cable is $L_x = (1/2)(30cm*T/1nsec)$.

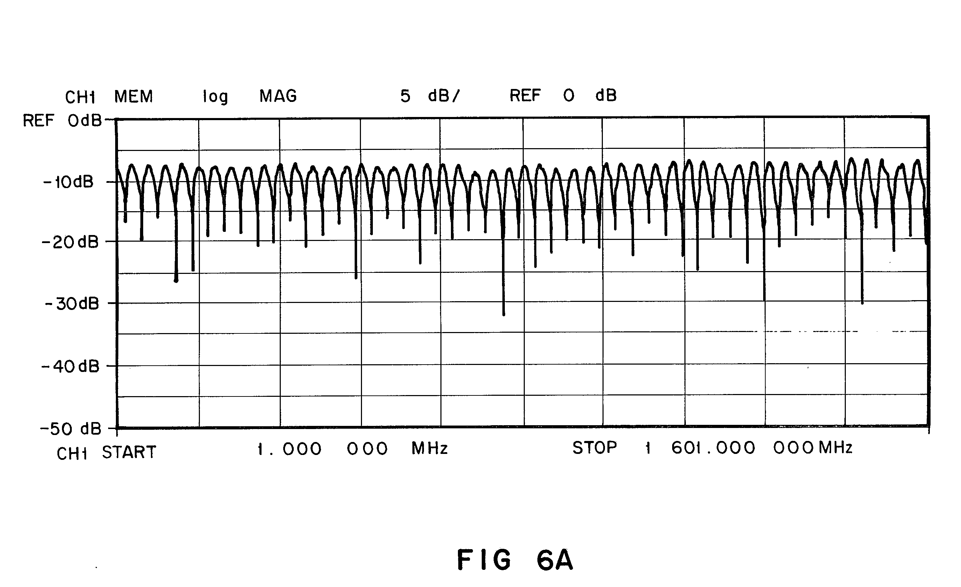

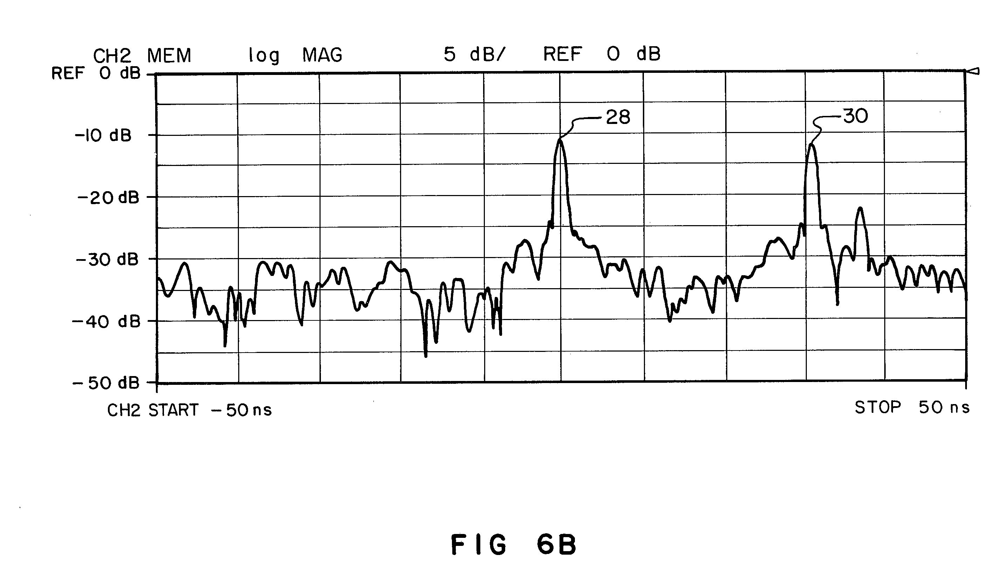

The distance(s) to one or more discontinuities is similarly measured. Fig. 6 shows an optical reflection measurement where return loss, in dB, is shown in the modulated frequency domain (Fig. 6A) and in the time domain (Fig. 6B). As shown in Fig. 6B, two distinct reflections are easily resolved, as shown by the events indicated by the numerals 28 and 30.

For a distance measurement, the reflected signal is detected, and the minimum time (or distance) resolution of the measurement is given by the reciprocal of the maximum modulation frequency span (mf span) in GHz. The reflected signal path length is $2*L_x$, as shown in Fig. 5. Therefore, the minimum free space length, $L_x$, (index of refraction, $n=1$) that the method in accordance with the invention can theoretically resolve is $(1/2n)(1/mf$ span-GHz)(30cm/nsec).

For the specific hardware implementation under discussion, the maximum modulation frequency span is approximately 2.997 GHz, which translates to a minimum theoretical distance resolution, $L_x$, of 5.0 cm (for $n=1$) (or 3.42 cm for $n=1.46$) between any two adjacent reflections. As greater modulation frequency spans are achieved, the minimum theoretical distance resolution between two adjacent reflections will decrease per the equation given in the preceding paragraph.

In accordance with the invention, the lightwave component analyzer 12 included in the lightwave component measurement system 10 incorporates in firmware a set of encoded softkey menus, instructional text displays, and pictorial block diagram displays which guide and aid the user while connecting the DUT for a desired test, as well as during the calibration and measurement processes. Code for generating user selections, instructions, and diagrams is embedded as a portion of the instrument mainframe firmware.

Considered in more detail, the lightwave component analyzer 12 has programmed into its read only memory (ROM) firmware a combination of text and graphics which are displayed to make the lightwave component measurement system 10 easy to operate and use. The text and graphics show the user how to set up the lightwave component measurement system 10 so that a distance and magnitude measurement for a discontinuity or a length measurement can be performed easily and quickly. The firmware also incorporates coded instructions for performing an inverse Fourier transform of frequency-domain information into time-domain data and coded instructions for calculating distance in accordance with the method of the invention as described earlier.

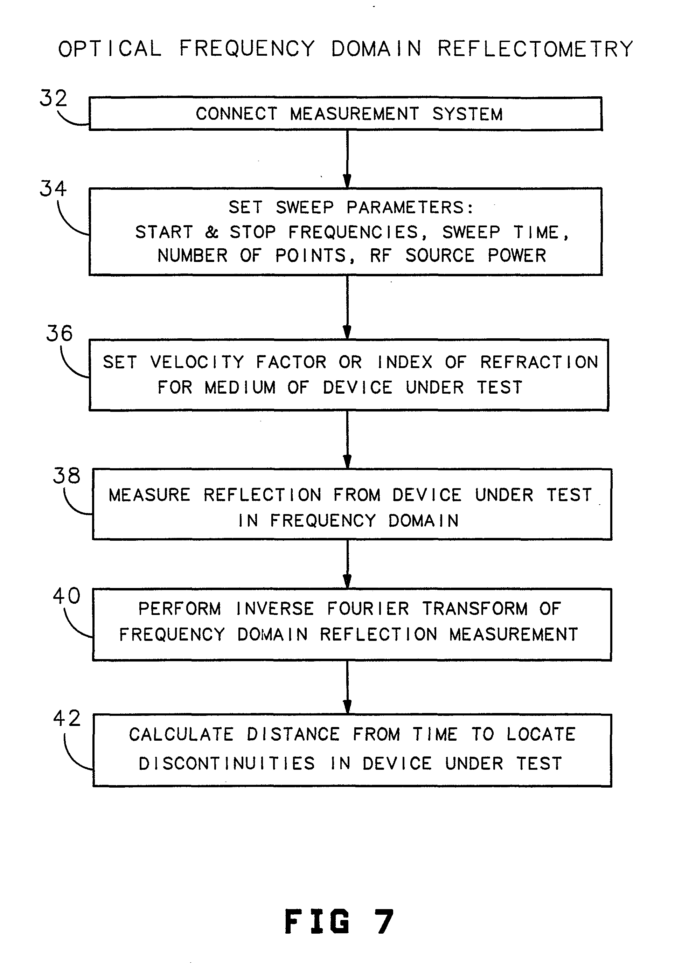

Considered in more detail, Fig. 7 is a flowchart of the distance (length) measurement method in accordance with the invention. As indicated by the numeral 32 shown in Fig. 7, initially, the lightwave component measurement system 10 is configured for locating a discontinuity in and/or measuring the length of the DUT by connecting the DUT in the lightwave component measurement system, as shown in Fig. 1.

Next, the user sets various sweep parameters, such as sweep start and stop frequencies, sweep time, number of data points, and RF source power, as indicated by the numeral 34 shown in Fig. 7. Then, the user enters the index of refraction for the optical transmission medium (DUT), as indicated by the numeral 36. At this juncture, the lightwave component measurement system 10 is in readiness for a measurement.

The user then commands the lightwave component measurement system 10 to measure a reflection(s) from the DUT in the frequency domain, as indicated by the numeral 38. Thereafter, the lightwave component analyzer 12 performs an inverse Fourier transform of the frequency-domain information obtained from the measurement into time-domain data, as indicated by the numeral 40. Finally, the lightwave component analyzer 12 computes the distance to a discontinuity in, and/or the length of, the DUT, as indicated by the numeral 42.

The firmware code associated with connecting the DUT in the lightwave component measurement system 10, setting the sweep parameters, and measuring, as indicated by the steps 32, 34, and 38, respectively, shown in Fig. 7, is substantially the same as the firmware code in the aforementioned HP8753 vector network analyzer. Also, the firmware code associated with setting the index of refraction, as indicated by the step 36, is equivalent to the firmware code associated with setting a velocity factor in connection with electrical measurements in the HP8753 vector network analyzer. The following pages contain a copy of the firmware code for an inverse chirp-Z Fourier transform which converts frequency-domain information to time-domain data in accordance with step 40 shown in Fig. 7 (pages 12-50) and the coded algorithm for calculating distance from time in accordance with step 42 shown in Fig. 7 (page 51).

## Claims

1. A method for measuring optical reflections which allows the resolution of one or more relections due to corresponding discontinuities in a device under test, characterised in that it comprises the steps of: producing a modulated optical signal; producing incident and reflected modulated lightwaves, the reflected lightwave being produced by the optical signal being reflected as the optical signal encounters a discontinuity in the device under test (DUT); vectorially adding the incident and reflected lightwaves to form frequency-domain information comprising an amplitude varying ripple pattern versus the modulation frequency, the periodicity and amplitude of each of the ripple components containing distance and magnitude information of the discontinuity; and calculating time-domain data from the modulation frequency-domain information by performing an inverse Fourier transform on the frequency amplitude and phase information, the location of the discontinuity being revealed by a signature in the time-domain data.

2. The method of claim 1 wherein the device under test is an optical transmission medium.

3. A method for measuring a length of optical transmission medium forming a device under test (DUT), characterised in that it comprises the steps of: producing a modulated optical signal; producing incident and reflected modulated lightwaves, the reflected lightwave being produced by the optical signal being reflected as the optical signal encounters the terminus of the device under test; vectorially adding the incident and reflected lightwaves to form frequency-domain information comprising an amplitude varying ripple pattern versus the modulation frequency, the periodicity and amplitude of each of the ripple components containing distance and magnitude information with respect to the length; calculating time-domain data from the modulation frequency-domain information by performing an inverse Fourier transform on the frequency amplitude and phase information, the length being revealed by a signature in the time-domain data.

4. The method of claim 3 wherein a given length of an optical fiber cable is measured.

5. The method of claim 3 or 4, further comprising the steps of: detecting a ripple with one periodic frequency whose period corresponds to a time delay equal to twice the electrical length of the optical transmission medium as given by the equation $T = 2L_x * 1nsec/30cm$; and calculating the length of the optical transmission medium as given by the equation $L_x = (1/2)(30cm * T/1nsec)$.

6. A lightwave component measurement system for measuring optical reflections to locate a discontinuity in, or measure length of, a device under test (DUT), the lightwave component measurement system being characterised in that it has a transform capability that converts data measured in the modulation frequency domain to the time or distance domain and in that it comprises: a lightwave component analyzer, including: a modulation source (20) for generating a swept electrical signal; and a tuned vector receiver (24) having an input port; a lightwave source (14) connected to the modulation source, the lightwave source including an electro-optical transducer for converting the electrical signal generated by the modulation source into an optical signal; a lightwave receiver (16) including an opto-electrical transducer for reconverting a received optical signal into an electrical signal; an optical signal separation device (26) coupled to the electro-optical transducers for feeding a portion of the optical signal produced by the electro-optical transducer included in the lightwave source (14) to the device under test (DUT) and another portion of the optical signal produced by the electro-optical transducer included in the lightwave source to the opto-electrical transducer included in the lightwave receiver (16), thereby producing incident and reflected modulated lightwaves, the reflected lightwave being produced by the optical signal being reflected as the optical signal encounters a discontinuity in the device under test; the electrical signal produced by the opto-electrical transducer included in the lightwave receiver being fed to the input port of the tuned vector receiver; means for vectorially adding the incident and reflected lightwaves to form frequency-domain information comprising an amplitude varying ripple pattern versus the modulation frequency, the periodicity and amplitude of each of the ripple components containing distance and magnitude information of a reflection at the discontinuity, including a terminus of the device under test; and means for calculating time-domain data from the modulation frequency-domain information by performing an inverse Fourier transform on the frequency amplitude and phase information, the location of the discontinuity being revealed by a signature in the time-domain data.

7. The lightwave component measurement system of claim 6 wherein the modulation source (20) generates a 300 kHz to 3 GHz electrical signal.

8. The lightwave component measurement system of claim 6 or 7, wherein the optical signal separation device (26) is a splitter/combiner.

9. The lightwave component measurement system of claim 6,7 or 8, wherein the tuned vector receiver (24) has a second input port, further comprising a power splitter (22) connected to the modulation source (20) for feeding a selected portion of the electrical signal generated by the modulation source to the electro-optical transducer included in the lightwave source (14) and another portion of the electrical signal generated by the modulation source as a reference signal to the second input port of the tuned vector receiver (24).

10. The lightwave component measurement system of any of claims 6 to 9 having a measurement dynamic range of at least 45 dB.

```
M68KL,P,"time"
BEGIN
COMMENT
****************************************************************
*
* This module contains the code for the TIME DOMAIN and GATING functions
*
****************************************************************
;

#FILE fdatap;
#FILE ccompute;                                    & correct_switch &
#FILE futil3;
#FILE cmsgtime;
#FILE cmessag0;
#FILE futil2;
#FILE crins;
#FILE fkernel;
#FILE fkernel4;                                         &preempt&
#FILE fchtable;                                   & e_ch_quad &
#FILE cchtable;
#FILE fchtab2;                           & ch_quad, ch_real, ch_int &
#FILE fchtab3;
#FILE fcontvar;                                   & for set_dp_vars &
#FILE fmemmgr;
#FILE fsize;
#FILE fstimuli;
#FILE ccal;                                       & for correct_on &
#FILE fcal0;            & for allocate_ and deallocate_correction_array &
#FILE facttbl2;                          & for get_dom                &
#FILE ccalmenu;                          & for Ccorrection            &
#FILE cdommenu;                          & for Cgate              &
#FILE fchdata;                                & for curr_e_ch     &
#FILE fswpbrk;
#FILE fmenu2;
#FILE ftracel;

PROCEDURE copy_user3( from_addr, to_addr, size );
                      VALUE from_addr, to_addr, size;
                      DOUBLE from_addr, to_addr; INTEGER size; EXTERNAL;
PROCEDURE ifft(adr);
  VALUE adr;  DOUBLE adr;                                   EXTERNAL.L;
PROCEDURE fft(adr);
  VALUE adr;  DOUBLE adr;                                   EXTERNAL.L;
PROCEDURE fftun(adr);
  VALUE adr;  DOUBLE adr;                                   EXTERNAL.L;

REAL PROCEDURE BESI(x);  VALUE x;       REAL x;            EXTERNAL;
REAL PROCEDURE SQRT(x);  VALUE x;       REAL x;            EXTERNAL;
REAL PROCEDURE  SIN(x);  VALUE x;       REAL x;            EXTERNAL;
REAL PROCEDURE  COS(x);  VALUE x;       REAL x;            EXTERNAL;
SUBROUTINE MPY2E_ptrs;                                     EXTERNAL;
SUBROUTINE MPY2E_ptr;                                      EXTERNAL;
SUBROUTINE MPY2E;                                          EXTERNAL;
SUBROUTINE MPYE_ptrs;                                      EXTERNAL;
SUBROUTINE MPYE_ptr;                                       EXTERNAL;
SUBROUTINE MPYE;                                           EXTERNAL;
SUBROUTINE DIVE_ptr;                                       EXTERNAL;
```

```
SUBROUTINE fetch_CNVE1;                                              EXTERNAL;
REAL PROCEDURE CNV2E(x); VALUE x;           REAL x;                  EXTERNAL;
SUBROUTINE magE;                                                    EXTERNAL.L;
SUBROUTINE angE;                                                    EXTERNAL.L;
SUBROUTINE DVR2;                                                    EXTERNAL;
SUBROUTINE fst_trig_long;                                           EXTERNAL.L;
SUBROUTINE fst_trig;                                                EXTERNAL.L;
SUBROUTINE ary_corr;                                         EXTERNAL.L;
SUBROUTINE ary_trace_math;                                     EXTERNAL.L;
SUBROUTINE set_dc_elec_length;                                   EXTERNAL.L;
SUBROUTINE ary_elec_length;                                    EXTERNAL.L;
EXTERNAL REAL TwoPi, Pi;
EXTERNAL DOUBLE TABLE corr_tbl.L;


DOUBLE dp_scr_array_time,
       dp_scr_array_freq,
       chirp_array,
       gate_array,
       pre_gate_array,
       post_gate_array,
       old_FsTs;
INTEGER num_fpts,
        num_tpts,
        ary_sz,
        fft_pts,
        chan,
        gate_parm,    old_gate_parm,
        stim,         old_stim;
REAL    time_window, old_time_window;
GLOBAL INTEGER fft_size;
GLOBAL BOOLEAN new_tdr_freq;
BITFIELD td_sts: compute_gate, compute_xform,flag,tdr_mode;
INTEGER CONSTANT compute_mask := %000C;  & mask for compute_gate,xform &
                            & order important &
REAL    Fo,  Fs,
        gate_cen_Fs,
        GspanFs,
        old_gate_cen_Fs,
        old_GspanFs,
        x0;                           &computed dc values&
INTEGER CONSTANT impulse := impulse_tdr,
        nop := 0,    mpy  := 1,    sum := 2;

INTEGER TABLE  pre_wind := 4;
INTEGER TABLE gate_wind := 8, 5, 5, 2;
INTEGER TABLE gate_size := 10,5, 2, 2;    & numbers reversed from 8510 &
```

```
#EJECT;COMMENT                                                          tdr_check
  ***********************************************************************
  *
  ***********************************************************************
  ;
PROCEDURE tdr_check;                                                    ENTRY;
BEGIN
  QUAD start, step, stop,
       pts ;

&   IF new_tdr_freq THEN    ?? dds &
      BEGIN
        acquire( acquisition_variables );
        pts := QUAD(num_of_lmpts);
        start := e_ch_quad( ch_start_frequency );
        stop  := start + e_ch_quad( ch_frequency_span );
        step := stop / pts;
        IF ( stop <> start*pts ) THEN
           BEGIN
             IF step < 300000 THEN
               BEGIN
                 step := 300000;
                 set_e_ch_quad( step*(pts - 1), ch_frequency_span );
               END;
             set_e_ch_quad( step, ch_start_frequency );
             set_e_ch_quad( step*(pts - 1), ch_frequency_span );
             upd_sscs_ch( curr_e_ch, freq_domain );
             tell( tdr_freq_change );
             beep_error;
             brk_swp_srce;
             check_cal( cpld_ch (ch_start_frequency) );
           END;
        new_tdr_freq := FALSE;
        release( acquisition_variables );
      END new_tdr_freq;

END   tdr_check;

COMMENT                                                            tdr_check_if
  ***********************************************************************
  * calls tdr_check if tdr type is a low pass type
  ***********************************************************************
  ;
SUBROUTINE tdr_check_if;                                                ENTRY;
  BEGIN
   IF ch_bitmap( Ctdr_impulse, curr_e_ch ) <= step_tdr   THEN
     tdr_check;
  END;
```

```
#EJECT;COMMENT                                          cont_datap_time
 ********************************************************************
 *
 ********************************************************************
 ;
 PROCEDURE   cont_datap_time( channel );
    VALUE    channel;
    INTEGER channel;                                         ENTRY;
    BEGIN & cont_datap_time &
       flag := 1;
    END;   & cont_datap_time &
```

```
#EJECT;COMMENT
**********************************************************************
*
* results in a fracitional part x 2^^32
**********************************************************************
;

DOUBLE PROCEDURE cyc_frac(x);        VALUE x;        REAL x;
BEGIN
BYTE xexp=x+3, exp;
DOUBLE xd=x;
INTEGER i7 = REGISTER 7, i6 = REGISTER 6; & to prevent local usage &

   exp := xexp+1;
   xd   := xd AND %FFFFFF00;
   cyc_frac := IF  exp<0  THEN  ARIGHT(xd,-exp)  ELSE  ALEFT(xd,exp);

END cyc_frac;
```

```
#EJECT; COMMENT
*********************************************************************
*   compute_dc_value is a copy of Dave's routine from his report
*
*   Averaging the pt-1, pt_2 values would provide more dc stability, and
*     improve baseline stability also.
*   Probaby a fix value exp averaging that is reset on any control_time
*     changes and on measurment restart, and ??????????
*********************************************************************
end of comment;
PROCEDURE    compute_dc_value;
BEGIN
REAL x1, y1,
     x2, y2,
     x_delta,    x_temp,
     raduis,     x_center;

ASSEMBLE( MOVE.L dp_scr_array_freq, R8;
          JSR    fetch_CNVE1;   MOVE.L R0,x1;   MOVE.L R1,y1;
          ADDQ.L #6,R8;
          JSR    fetch_CNVE1;   MOVE.L R0,x2;   MOVE.L R1,y2);

  IF ABS( (x_delta := x2 - x1 ) ) >.001 THEN
      BEGIN     & x seperation enought to aviod noise or DIV by Zero &
      x_center := .5 *( x2 + x1 + ( y2 + y1 )*( y2 - y1 ) / ( x_delta ));
                           & DANGER    x2 = x1 problems &
      x_temp    :=   x1 - x_center;
      raduis    :=   SQRT(  ( x_temp*x_temp ) + ( y1*y1 )  ) ;
      x0        :=   x_center  +  ( IF y1<0 THEN raduis ELSE -(raduis) ) ;
      END
    ELSE  & signal too small or too close &
      x0 := x1;
  CNV2E( x0 );
  ASSEMBLE( MOVE.L  dp_scr_array_time, R8;
          CLR.W      (R8)+;
          MOVE.W  R0, (R8)+;
          MOVE.W  R1, (R8)+   );
END;


REAL PROCEDURE    compute_tg0_value;
BEGIN
REAL delta_ang ;
   ASSEMBLE( MOVE.L dp_scr_array_time, R8;
             MOVE.L (R8)+,  R0;  MOVE.L  R0,R2;   SWAP    R2;
             MOVE.W (R8)+,  R1;  MOVE.W  R1,R2;   MOVE.L  R2,    x0;
             JSR    DIVE_ptr;
             JSR    angE;
             MOVE.L R0, delta_ang   );
   compute_tg0_value := delta_ang / ( 360. * Fs );
END compute_tg0_value;
```

```
#EJECT;COMMENT
****************************************************************************
*
*    sum in ramp portion of step response
*     see Dave's report pg6,7, this is presently only the linear portion
****************************************************************************
;
PROCEDURE td_ramp(adr, FsTo, FsTs);
              VALUE adr, FsTo, FsTs;
              DOUBLE adr;  REAL FsTo, FsTs;
  BEGIN
     DOUBLE ptr12 = REGISTER 12;                    & freeze use of R12 &
     REAL t, correction;

     t   := FsTo;
     ptr12 := adr;

     REPEAT num_tpts DO           &do the H(0) * Fs * T ramp correction &
        BEGIN
        correction  :=   ( x0 * t ) ;
        ASSEMBLE (  CLR.W            (R12)+;    & clear imag part &
                    MOVE.L  correction, R0;
                    MOVE.L  (R12),  R1;         JSRX  ADD2;
                    SWAP    R0;                 MOVE.W  R0,(R12)+;
                    SWAP    R0;                 MOVE.W  R0,(R12)+   );
        t         :=  t + FsTs;                           &becomes FsT &
        END pts loop;

  END td_ramp;
```

```
#EJECT;COMMENT
**************************************************************************
*
*    two array multiply
**************************************************************************
;

PROCEDURE array_mpy( adr1, adr2, pts);
            VALUE adr1,adr2,      & input1, input2 ( output )&
                  pts; INTEGER pts;    & array size &
            DOUBLE adr1,adr2;
BEGIN
INTEGER loopctr = REGISTER 7;
LABEL loop, test;
   ASSEMBLE(
              MOVE.L  adr1,  R8;
              MOVE.L  adr2,  R10;
              MOVE.L  R10,   R13;
              MOVE.W  pts,   loopctr;
              BRA     test;
        loop: JSR     MPYE_ptrs;
              MOVE.L  R0, (R13)+;
              MOVE.W  R1, (R13)+;
        test: DBRA    loopctr, loop                          );

    preempt;
. END array_mpy

COMMENT                                                      stim_mpy
**************************************************************************
*  Multiplies a scalar array by a vector array
*     Depending on mode, it will also do a real/imag swap of the
*        resultant array for all points but the first ( for step )
**************************************************************************
;
PROCEDURE stim_mpy( adr1, adr2, pts, mode);
  VALUE adr1,adr2,      & input1, input2 ( output )&
        pts, mode;
  INTEGER pts, mode;
  DOUBLE adr1, adr2;
BEGIN
INTEGER loopctr = REGISTER 7;
LABEL loop1, loop2, test1, test2;

ASSEMBLE(    MOVE.L adr1, R10;      & real word &
             MOVE.L adr2, R8;       & complex word &
             MOVE.L  R8,  R13;
             MOVE.W  pts, loopctr;
             BRA testl;
       loop1: JSR  MPY2E_ptrs;
             MOVE.L R0, (R13)+;
             MOVE.W R1, (R13)+;
       test1: DBRA    loopctr, loop1 );

IF mode <> impulse THEN          & do the 1/j mpy needed for step &
   ASSEMBLE(   MOVE.L adr2, R13;
               MOVE.W pts, loopctr;
               SUBQ  #2, loopctr;   & skip first point &
       loop2:  ADDQ.L #6, R13;
```

```
        MOVE.L (R13), R0;
        SWAP   R0;
        NEG    R0;
        BVC  test2;
        MOVE  =H7FFF, R0;
test2:  MOVE.L R0, (R13);
        DBRA loopctr, loop2 );

  preempt;

END stim_mpy;
```

```
#EJECT;COMMENT
**********************************************************************
           zero out imag part ( only real )
**********************************************************************
;
 PROCEDURE array_zero_imag(adr, pts ); VALUE adr ,pts ;
                                        DOUBLE adr;    INTEGER pts ;
 BEGIN
  INTEGER loopctr=REGISTER 7;
  LABEL loop, test;
  ASSEMBLE(
            MOVE.L    adr,  R8;
            MOVE.W    pts,  loopctr;
            BRA       test;
      loop: CLR.W        (R8);
            ADDQ.L    #6,  R8;
      test: DBRA      loopctr, loop            );
 END array_zero_imag;


COMMENT
**********************************************************************
           zero out array  R11 has ptr,  R7 has repeat count
**********************************************************************
;
SUBROUTINE  array_zero;
BEGIN
LABEL loop, test;
ASSEMBLE(
              BRA     test;
       loop:  CLR.L          (R11)+;
              MOVE.W  =H80, (R11)+;
       test:  DBRA    R7,   loop          );
END array_zero;

PROCEDURE user3_zero( addr, numb);
               VALUE addr, numb; DOUBLE addr; INTEGER numb;      ENTRY;
BEGIN
    ASSEMBLE(  MOVE numb, R7;  MOVE.L addr, R11;  BSR array_zero );
END user3_zero;
```

```
#EJECT; COMMENT
**************************************************************
* builds the chirp array -- builds it in three stages
*        stage 1 the zero pt
*        stage 2 the first and last segments which are mirror images
*                and are pts - 1 long
*        stage 3 the middle segment is zeroed out -- this is size+1-2*pts
*
* NOTE: PROCEDURE ASSUMES THAT num_fpts >= num_tpts.
*   This is not a chirp xform limitation - just a limitation of the
*    the mod done to this procedure to allow different number of points
**************************************************************
end of comment;
PROCEDURE build_chirp( adr, fpts, FsTs ); VALUE adr, fpts, FsTs;
                                DOUBLE adr, FsTs;  INTEGER fpts;
BEGIN
INTEGER POINTER ptr11=REGISTER 11, ptr12=REGISTER 12;
DOUBLE ang_delta=REGISTER 3, ang_inc=REGISTER 6, ang=REGISTER 9;
INTEGER loopctr =REGISTER 7;
LABEL loop, test, skip1, azero, check;

     STPNTR(ptr11, adr); STPNTR(ptr12, adr+ary_sz);
     ASSEMBLE(CLR.W      (R11)+;  MOVE.L =H40000001, (R11)+  );
                                        & set first val = 1.0&

     ang_delta :=  -FsTs;
     ang_inc   := ang := ARIGHT(ang_delta,1);
      ASSEMBLE(                          & R11 is first segment &
             MOVE.W fpts, loopctr;       & R12 is last  segment &
             SUB    #1, loopctr;
             BRA    test;
       loop: MOVE.L ang, R0;
             JSR    fst_trig_long;    & uses R0,1,4,5,10 &
             MOVE.W  R1, -(R12);   &  CLR.W      -(R12); &
             MOVE.L  R0, -(R12);
             CMPA.L  R11,  R12;
             BLE   skip1;
             MOVE.L R0,  (R11)+;
             MOVE.W R1,  (R11)+;    &  CLR.W      (R11)+; &
      skip1: ADD.L  ang_delta,ang_inc;
             ADD.L  ang_inc,ang;
       test: DBRA  loopctr, loop              );

     ASSEMBLE(
             BRA check;
      azero:  CLR.L   (R11)+;
              CLR.W   (R11)+;
      check:  CMPA.L R11, R12;
              BGT  azero );


     ifft(adr );
     fftun(adr );                    & includes a preempt &

END build_chirp;
```

```
#EJECT;COMMENT
*******************************************************************************
* special routine for use by the run time chirp
*******************************************************************************
end of comment;
SUBROUTINE mpy_chirp;
    BEGIN
    LABEL loop, test;
    INTEGER loopctr=REGISTER 7;
    DOUBLE ang_delta=REGISTER 12, ang_inc=REGISTER 6, ang=REGISTER 9;
    ASSEMBLE(
                    BRA     test;
              loop: MOVE.L  ang, R0;
                    JSR fst_trig_long;      & CLR.W R1; &
                    MOVE.L  R11,  R8;
                    JSR     MPYE_ptr;
                    MOVE.L  R0, (R11)+;
                    MOVE.W  R1, (R11)+;
                    ADD.L   ang_inc, ang;
                    ADD.L   ang_delta, ang_inc;
              test: DBRA    loopctr, loop                        );
END mpy_chirp;
```

```
#EJECT;COMMENT
************************************************************************
************************************************************************
end of comment;
PROCEDURE chirpxfm(adrl,adr2,fpts,tpts,FsTs,FsTo,FoTs,FoTo);
    VALUE adrl,adr2,   & adr ptr to scr and chirp arrays &
          fpts,        & # of freq pts available  &
          tpts,        & # of time pts to generate &
          FsTs,FsTo,   & FreqStepTimeStep, FreqStepTimeInit  products &
          FoTs,FoTo;   & FreqInitTimeStep, FreqInitTimeInit  products &
    DOUBLE adrl,adr2;
    INTEGER fpts, tpts; DOUBLE FsTs,FsTo,FoTs,FoTo;
BEGIN
    DOUBLE ang_delta=REGISTER 12, ang_inc=REGISTER 6, ang=REGISTER 9;
    INTEGER POINTER ptrll=REGISTER 11;
    INTEGER loopctr=REGISTER 7;

      &  the actual chirp-Z code &
      &  see DAVE'S paper          &

    ang_delta := FsTs;
    ang_inc   := ang := FsTo + ARIGHT(ang_delta,1);
    ang_inc   := ang_inc  + ang_delta;
    loopctr:=fpts-1;
    STPNTR(ptrll,adrl+6);            & skip first mpy -- it is by one &
    mpy_chirp;

    ASSEMBLE(  MOVE.W   fft_pts, loopctr;    SUB.W  fpts, loopctr;
               BSR      array_zero                );

    ifft( adrl );
    fftun( adrl );                    & includes a preempt &

    &NOTE: UNSCRAMBLING NOT REQUIRED IN CHIRPXFM IF A SECOND
           FFT IS WRITTEN THAT ACCEPTS SCRAMBLED INPUTS.&

    array_mpy( adr2, adrl, fft_pts );                    & CONVOLUTION &

    fft(adrl);
    fftun(adrl);                        & includes a preempt &


    STPNTR(ptrll, adrl);
    ang_delta := FsTs;
    ang_inc   := FoTs + ARIGHT(ang_delta,1);      ang := FoTo;
    loopctr:=tpts;                                &mpy by  down chirp &
    mpy_chirp;

    END chirpxfm;
```

```
#EJECT; COMMENT
*********************************************************************
*generate a window array -- with various parameters
*    mode = TRUE for base band / FALSE for band pass
*
*   modified so it stores only real values unless the mpy option
*       is specified, it which case it does a real*complex multiply
*
*********************************************************************
;
REAL PROCEDURE td_window(adr, wind_parm, mode, pts, opt);
     VALUE   adr,wind_parm,mode,  & array adr,  window parm, mode&
             pts,opt;               & number of data pts,&
         DOUBLE adr; INTEGER wind_parm, pts, opt; BOOLEAN mode;
 BEGIN
  REAL parm,X,G,FN,SUM,norm;  INTEGER N;  BOOLEAN rect;
  DOUBLE POINTER ptr12=REGISTER 12;

   IF mode THEN   N:= 0   ELSE N:= -ARIGHT(pts-1, 1) ;
   SUM:=0.;
                                         )
   FN := 2.0/REAL(pts -1);                                     &rf modes&
   IF mode THEN FN := .5 * FN;                        &baseband&

   rect := ( wind_parm = 0 );
   parm := REAL( wind_parm );

   norm:=1./BESI(parm);


   STPNTR(ptr12,adr);              &besi and Sqrt do not use reg12&
  REPEAT pts DO                          &compute/store window loop&
    BEGIN
    X:=REAL(N)*FN;

    IF (N=0) OR rect THEN G:=1.0 ELSE
     G:=BESI( parm * SQRT( 1- X*X ) ) * norm ;              &bess&


    IF opt = sum THEN BEGIN                                    &sum&
       IF N>0 AND mode THEN G:=2.*G;&double for non dc terms&
       SUM:=SUM+G; END;                            & MOVE ???? &

    IF opt = mpy THEN
            ASSEMBLE(  MOVE.L G, R2;
                       MOVE.L R12, R8;
                       JSR MPY2E_ptr;
                       MOVE.L R0, (R12)+;
                       MOVE.W R1, (R12)+ )
        ELSE
          ASSEMBLE(  MOVE.L G, (R12)+ );

    N := N + 1;

   END pts loop ;

   preempt;
   td_window:=SUM;
   END td_window;
```

```
#EJECT;COMMENT
******************************************************************
*
******************************************************************
;
PROCEDURE td_stim(adr);
   VALUE adr;  DOUBLE adr;
 BEGIN
  REAL G1,G0,G,GS;
  REAL POINTER ptr12=REGISTER 12;
  INTEGER  N;

  G1 := td_window( adr, time_window,
                       tdr_mode, num_fpts, sum );
                                              &create window first&
                                              &remember area &
          &COMPENSATE FOR LACK OF 1/N IF ifft&
  G0:= 1.0/(G1*REAL(fft_pts));       &Normalize to height,&
  GS:=-1.0/(REAL(fft_pts)*TwoPi);
                          &for step \ area is 1, no normalizing needed&

  STPNTR(ptr12,adr);
  FOR N := 0 TO num_fpts - 1 DO
   BEGIN
    IF stim = impulse THEN   G := G0              & impulse &
     ELSE   BEGIN IF N<>0 THEN G:=GS/REAL(N)      & step harmonics &
                  ELSE G := .5/REAL(fft_pts);  & step DC &
          END;
   ptr12[N] := ptr12[N] * G;
   END loop;

  END td_stim ;
```

```
#EJECT; COMMENT
************************************************************************
************************************************************************
end of comment;
PROCEDURE do_time_domain;
BEGIN
REAL To, Ts, tg0;

DOUBLE FoTo, FoTs, FsTo, FsTs ;
DOUBLE temp;

    To  :=  ch_real( ch_start_xform , chan );
    Ts  :=  ch_real( ch_xform_span , chan)/ REAL( num_tpts - 1 );

    FoTo := cyc_frac( Fo * To );
    FoTs := cyc_frac( Fo * Ts );
    FsTo := cyc_frac( Fs * To );
    FsTs := cyc_frac( Fs * Ts );
    IF tdr_mode THEN stim := ch_bitmap( Ctdr_impulse, chan )
     ELSE             stim := impulse;
    time_window := ch_real( ch_window, chan ) ;


    IF ( FsTs # old_FsTs ) OR ( old_stim # stim )
            OR ( old_time_window # time_window ) THEN flag := 1;


    IF (mem_stolen(chirp_array, td_chirp_arrays_id,
                        ( ary_sz + 6 + 4*num_mpts[ chan ]))
            OR flag ) AND ( chirp_array # 0 ) THEN
        BEGIN
        tell( comp_time_coeff );
        old_FsTs := FsTs;
        old_stim := stim;
        old_time_window := time_window ;
        build_chirp( chirp_array , num_fpts,  FsTs );
        td_stim(  chirp_array + ary_sz );
        clr_msg( comp_time_coeff );
        END;
```

```
#EJECT;
     IF chirp_array # 0 THEN
        BEGIN

        IF tdr_mode THEN    tg0 := compute_tg0_value;


        IF ch_bit( Cwindow_mem, chan ) = 1 THEN
          BEGIN
           temp := ch_dbl( ch_m_base, chan );
           IF temp <> 0 THEN
              BEGIN
               array_mpy( temp, dp_scr_array_time, num_fpts - tdr_mode);
               IF tdr_mode THEN
                  user3_zero( dp_scr_array_time + (num_fpts-1)*6, 1 );
              END;
          END
         ELSE
          stim_mpy( chirp_array + ary_sz,
                              dp_scr_array_time, num_fpts,  stim );

        chirpxfm(  dp_scr_array_time, chirp_array,  num_fpts, num_tpts,
                   FsTs, FsTo, FoTs, FoTo  );
        IF tdr_mode THEN
           BEGIN
           IF stim = impulse_tdr THEN
                   array_zero_imag(dp_scr_array_time, num_tpts )
            ELSE td_ramp( dp_scr_array_time, Fs*(To-tg0),Fs*Ts );
           END tdr_domain cleanup ;

        release_mem_if( td_chirp_arrays_id  ) ;
        END
     ELSE
        warn( exceeded_available_memory );

END do_time_domain;
```

```
#EJECT; COMMENT
***********************************************************************
***********************************************************************
end of comment;
PROCEDURE build_gate( gate_adr );
                      VALUE gate_adr;
          DOUBLE gate_adr;
BEGIN
  INTEGER loopctr=REGISTER 7;
  DOUBLE  temp12=REGISTER 12;        & prevents local use of R12  &
  DOUBLE  exp_step,
          exp_parm,
          temp = exp_parm;
  REAL pt_0,
       sin_step, sin_dem,
       sin_real,
       n_real;
  INTEGER  pts, n, loop,
       mant_pt_0 = pt_0,  exp_pt_0 = pt_0 + 2;
  LABEL loop3, test3;

    pts := ( num_fpts/gate_size[gate_parm]) + 1 ;
    IF pts <= 1 THEN pts := 2;    & to solve 3 pts wide gate crashes &
    IF pts > ( fft_pts - num_fpts ) THEN
            BEGIN   & reduce gate points - assume bandpass gating only &
               pts := fft_pts - num_fpts;
            END;


    pt_0  :=  GspanFs / REAL(fft_pts);          &scaling fft &
    sin_step := Pi * GspanFs ;
    sin_dem  := Pi * REAL(fft_pts*.5);          &scaling fft &

    IF tdr_mode THEN
       BEGIN    pt_0 := pt_0 * 2.0 ;  sin_dem := sin_dem / 2.;   END;

    exp_step := exp_parm := cyc_frac( -gate_cen_Fs );

    ASSEMBLE(    MOVE.L  gate_adr, R12;      MOVE.W  pts,   loop;
                 CLR.W            (R12)+;    SUB.W   #1,    loop;
                 MOVE.W  mant_pt_0,(R12)+;   MOVE.W  #1,    n;
                 MOVE.W  exp_pt_0, (R12)+         );
```

```
#EJECT;
    REPEAT loop DO
        BEGIN
        n_real:= REAL( n );
        sin_real := SIN( sin_step * n_real ) / (sin_dem * n_real) ;
                    & SIN  does not use R12 --- rewrite this mess  &
        ASSEMBLE(   MOVE.L  exp_parm, R0;    JSR fst_trig_long;
                    MOVE.W  R1, -(S);        & CLR.W  -(S); &
                    MOVE.L  R0, -(S);
                    MOVE.L  sin_real, R0;    JSR CNV2E;
                    MOVE.L  S,   R8;         JSR MPYE_ptr;
                    MOVE.L  R0,    (R12)+;
                    MOVE.W  R1,    (R12)+;
                    ADDQ.L  #6, S   );
        n := n + 1;
        exp_parm  := exp_parm  +  exp_step;
        END loop;

    ASSEMBLE(   MOVE.L  R12, R11;                        & zero fill &
                MOVE.W fft_pts, loopctr;     SUB.W  pts,   loopctr;
                BSR     array_zero   );       & R11 is adr, R7 count &

    td_window( gate_adr, gate_wind[ gate_parm ], TRUE,
                    pts,  mpy );

    preempt;
    fft( gate_adr);
    fftun( gate_adr);      &only the real part used&

    COMMENT shrink array size by pulling out imaginary component;
    ASSEMBLE(  MOVE.L gate_adr, R8;
               MOVE.L R8,  R13;
               MOVE   fft_pts, R1;
               BRA    test3;
        loop3: ADDQ.L #2, R8;             & skip imaginary part &
               MOVE.L  (R8)+, (R13)+;     & move real, exponent &
        test3: DBRA  R1, loop3 );
END build_gate;
```

```
#EJECT; COMMENT
**********************************************************************
**********************************************************************
end of comment;
PROCEDURE gate( data_adr, gate_adr );
        VALUE   data_adr, gate_adr;
        DOUBLE  data_adr, gate_adr;
BEGIN
  LABEL exp_test,loop, test;
  INTEGER offset;
  INTEGER loopctr=REGISTER 7;

     offset := 6 * num_fpts;
     ASSEMBLE(                             & zero fill data array&
             MOVE.L data_adr, R11;    ADDA.W  offset, R11;
             MOVE.W fft_pts, loopctr;  SUB.W  num_fpts,   loopctr;
             BSR      array_zero      );   & R11 is adr, R7 count &

     IF tdr_mode THEN
         ASSEMBLE(                                  &half 1st pt??&
             MOVE.L  data_adr,   R11;    ADDQ.L   #4,  R11;
             MOVE.W  (R11),       R0;    SUB.B   #1,  R0;
             BVC     exp_test;           ADD.B   #1,  R0;
     exp_test:MOVE.W  R0,        (R11)   );

     fft( data_adr);
     fftun( data_adr);& includes a preempt &


     ASSEMBLE(
             MOVE.L  gate_adr, R10;   MOVE.L  data_adr,  R8;
             MOVE.W  fft_pts,loopctr;  MOVE.L   R8,        R13;
             MOVE.L  #-1,      R5;
             BTST    =D0,  td_sts+1;    &tdr_mode&
             BEQ     test;              &if flg false (0) branch &
             MOVE.L  =H0FFFF, R5;       &real data only mask&
             BRA     test;
        loop: MOVE.L  (R8)+,  R0;
             AND.L    R5,     R0;
             MOVE.W  (R8)+,  R1;
             MOVE.L  (R10)+, R2;        & real only &
             JSR     MPY2E;             & real * complex &
             MOVE.L  R0,  (R13)+;
             MOVE.W  R1,  (R13)+;
        test: DBRA    loopctr, loop    );

     preempt;
     ifft( data_adr);
     fftun( data_adr);& includes a preempt &

END gate;
```

```
#EJECT; COMMENT
******************************************************************
*
*will at first use a fft size array ( adr ) but after  gating only
* the freq size array elements will be used
******************************************************************
end of comment;
PROCEDURE build_gate_comp( adr );
                        VALUE adr;
            DOUBLE adr;
BEGIN
DOUBLE temp,
       ang_delta=REGISTER 12, ang=REGISTER 9;
INTEGER loopctr = REGISTER 7;
LABEL loop1, loop2, test1, test2;

   temp      := - cyc_frac( gate_cen_Fs * Fo / Fs );
   ang_delta := - cyc_frac( gate_cen_Fs );
   ang       := temp;
   ASSEMBLE(
               MOVE.L  adr,  R13;
               MOVE.W  num_fpts,   loopctr;
               BRA     test1;
         loop1: MOVE.L  ang, R0;
               JSR     fst_trig_long;
               MOVE.L   R0, (R13)+;
               MOVE.W   R1, (R13)+;
               ADD.L   ang_delta, ang;
         test1: DBRA    loopctr, loop1 );

   td_window( adr, pre_wind, tdr_mode,  num_fpts, mpy );

   gate( adr, gate_array );


   ASSEMBLE(                              & invert results &
               MOVE.L  adr,  R9;
               MOVE.L  R9,  R13;
               MOVE.W  num_fpts,   loopctr;
               BRA     test2;
         loop2: MOVE.L  (R9)+, R0;
               MOVE.W  (R9)+, R1;
               JSR     magE;           & uses R10 ! &
               MOVE.L  =F1.0,  R1;
               JSR     DVR2;
               MOVE.L  R0,  (R13)+;   & store as real array only &
         test2: DBRA    loopctr, loop2 ;
               MOVE.L  R13,  pre_gate_array              );


  td_window( pre_gate_array, pre_wind, tdr_mode, num_fpts, nop );
END build_gate_comp;
```

```
#EJECT; COMMENT
*********************************************************************
*********************************************************************
end of comment;
PROCEDURE do_gating;
BEGIN
REAL GoFs;
INTEGER temp_size, temp_size2;

    GoFs    := Fs * ( ch_real(ch_gate_start, chan) );
    GspanFs := Fs * ( ch_real(ch_gate_span,  chan) );
    IF GspanFs < 0. THEN GspanFs := 1.0 + GspanFs;
    IF ABS(GspanFs) > 1.0 THEN GspanFs := 1.0;
    gate_cen_Fs :=  GoFs + GspanFs / 2. ;
    gate_parm := ch_bitmap( Cmax_gate, chan);

    IF ( old_gate_cen_Fs # gate_cen_Fs ) OR ( old_GspanFs # GspanFs )
         OR ( old_gate_parm # gate_parm )
       THEN flag := 1;

    temp_size := INTEGER(ary_sz/3)*5;
    temp_size2 := INTEGER(ary_sz/3)*2 + 8*num_mpts[ chan ];
    IF temp_size2 > temp_size THEN temp_size := temp_size2;
    IF ( mem_stolen( gate_array, td_gate_arrays_id, temp_size )  OR
         flag  )  AND (gate_array # 0) THEN
       BEGIN
       tell( comp_gate_coeff );
       old_gate_cen_Fs := gate_cen_Fs;      old_GspanFs := GspanFs;
       old_gate_parm := gate_parm;
       build_gate( gate_array );

       post_gate_array := gate_array + INTEGER(ary_sz/3)*2;
       build_gate_comp( post_gate_array );
       clr_msg( comp_gate_coeff );
       END;

    IF gate_array # 0 THEN
       BEGIN

       &Pre_comp&
       stim_mpy( pre_gate_array, dp_scr_array_time, num_fpts, impulse );

       gate( dp_scr_array_time, gate_array );

       &Post Comp &
       stim_mpy( post_gate_array, dp_scr_array_time, num_fpts, impulse );

       release_mem_if( td_gate_arrays_id  ) ;
       END
     ELSE
        warn( exceeded_available_memory );

END do_gating;
```

```
#EJECT;
COMMENT                                                           do_demod
*******************************************************************************
*
*   Does either the amplitude or phase demodulation of the data
*
*      Amplitude demod removes any phase modulation information
*         by replacing  x+jy with sqrt(x*x + y*y).
*
*      Phase demod removes any amplitude modulation information
*         by replacing  x+jy with x+jy/(sqrt(x*x + y*y)).
*
*******************************************************************************
;
PROCEDURE do_demod( adrs, pts, type );
  VALUE adrs, pts, type;
  DOUBLE adrs;   INTEGER pts, type;
  BEGIN
    INTEGER POINTER ptr12 = REGISTER 12;
    INTEGER loopctr = REGISTER 7;
    LABEL loop1, loop2;
    STPNTR( ptr12, adrs );
    loopctr := pts - 1;
    IF type = 1 THEN & amplitude demod &
        ASSEMBLE(
          loop1: MOVE.L  (R12), R0;
                 MOVE.W 4(R12), R1;
                 JSR  magE;
                 CLR.W   (R12)+;
                 MOVE.L  R0, (R12)+;
                 DBRA   loopctr, loop1 )
      ELSE           & phase demod &
        ASSEMBLE(
          loop2: MOVE.L  (R12), R0;
                 MOVE.W 4(R12), R1;
                 JSR  magE;
                 MOVE.L =H40000001, R1;
                 JSR  DVR2;                & 1/|MAG| &
                 MOVE.L  R0, R1;
                 CLR.W   R0;
                 SWAP    R0;               & convert real to E cpx &
                 MOVE.L  R12, R8;
                 JSR  MPYE_ptr;            & need real * cpx &
                 MOVE.L  R0, (R12)+;
                 MOVE.W  R1, (R12)+;
                 DBRA loopctr, loop2 );

    END;  & do demod &
```

```
#EJECT;
COMMENT                                                         size_of_fft
***********************************************************************
*
*    Could use a more efficient algorithm
*
***********************************************************************
;
INTEGER SUBROUTINE size_of_fft;
  BEGIN
         IF num_fpts > 402 THEN size_of_fft := 11    & 2k xform &
    ELSE IF num_fpts > 202 THEN size_of_fft := 10    & 1k   &
    ELSE IF num_fpts > 102 THEN size_of_fft := 9     & 512 &
    ELSE IF num_fpts > 52  THEN size_of_fft := 8     & 256 &
    ELSE size_of_fft := 7;                           & 128 &
  END;
```

```
#EJECT; COMMENT
*********************************************************************
*
* HISTORY
* 8/9/83 -- error in computing Fs fixed
* 6/4/85 -- processing reordered, update_block parameter added
*********************************************************************
end of comment;
PROCEDURE ary_datap( update_block, ch );
   VALUE update_block, ch;
   INTEGER update_block, ch;                                    ENTRY;
BEGIN
DOUBLE ptrs_base  = REGISTER 11; & caution possible problem ?? dds 7/2 &
DOUBLE vars_base  = REGISTER 12;
DOUBLE POINTER dp_ptrs = ptrs_base;
DOUBLE POINTER dp_vars = vars_base;
INTEGER point, num_pts_freq, demod;
DOUBLE  dp_d,dp_m;
```

```
#EJECT;
  compute_xform := ch_bit( Ctransform, ch );
  compute_gate  := ch_dm_bit( Cgate, ch,
            IF update_block = update_m THEN 0 ELSE 1 );
  num_fpts := num_pts_freq := num_mpts[ ch ];
  num_tpts := num_pts[ ch ];
  fft_size := size_of_fft;
  fft_pts := ALEFT(1, fft_size );
  IF ( td_sts AND compute_mask ) <> 0 THEN
        ary_sz := fft_pts
    ELSE ary_sz :=  num_mpts[ ch ] + 1;
  ary_sz := ary_sz * 6;
  mem_stolen( dp_scr_array_time, td_scr_arrays_id, ary_sz );
  IF  dp_scr_array_time  # 0   THEN
       BEGIN
       chan := ch;

       dp_scr_array_freq := dp_scr_array_time;
       IF ch_bit( Ccw_time, chan )  THEN
         BEGIN
           tdr_mode := 0;
           demod := ch_bitmap( Cdemod_off, ch );
           Fo := 0.0;
           Fs := ch_real( ch_sweep_time, chan ) /
                   REAL( num_mpts[ chan ] - 1 );
         END
        ELSE
         BEGIN
          demod := 0;
          Fo   := REAL( ch_quad( ch_start_frequency, chan ));
          Fs   := freq_step( chan );
         END;

       IF (( td_sts AND compute_mask ) <> 0 ) AND  ( demod = 0 ) AND
          ( ch_bitmap( Ctdr_impulse, chan ) <= step_tdr ) THEN
          BEGIN
          num_fpts := num_fpts + 1;
          dp_scr_array_freq := dp_scr_array_freq + 6;
          Fo      := 0.0 ;
          tdr_mode := 1;
          END  low pass domains
         ELSE tdr_mode := 0;


   IF update_block = update_raw THEN
      BEGIN
      IF ch_bit( Ccorrection, ch ) = 1 THEN
          BEGIN
          COMMENT dds 10/13/85
          allocate_correction_array( ch );

          & allocate may have turn off correction or move coeffs&
          IF ch_bit ( Ccorrection, ch ) = 0  THEN
            BEGIN
            set_vars_ptrs_base( 0 );                        &restore&
            dp_vars[ dp_correct_sw ]:= corr_tbl[ 0 ];
            END
           ELSE
             set_dp_ptrs(ch, 0, 1 & ch_trace_base & );
```

```
    END ;

  set_vars_ptrs_base( 0 );                                    & restore &
  dp_d := dp_ptrs[ dp_d_ptr ];

  ASSEMBLE( MOVE num_pts_freq, .R7;
            MOVE.L dp_scr_array_freq, R13
          );
  ary_corr;

  copy_user3( dp_scr_array_freq,  dp_d, num_pts_freq );

END;


IF update_block = update_m THEN
   BEGIN
   set_dp_ptrs(ch, 0, 0 & ch_m_trace_base &);
   set_vars_ptrs_base( 0 );
   dp_m := dp_ptrs[ dp_m_ptr ];
   copy_user3( dp_m, dp_scr_array_freq, num_pts_freq );
   END
ELSE
   BEGIN & update_raw OR update_d &
   set_dp_ptrs( ch, 0, 1 & ch_trace_base &);
   set_vars_ptrs_base( 0 );
   ASSEMBLE(  MOVE   num_pts_freq, R7;
              MOVE.L dp_scr_array_freq, R13 );
   ary_trace_math;
   END;

IF tdr_mode THEN compute_dc_value;

IF demod > 0 THEN
     do_demod( dp_scr_array_time, num_fpts, demod );

IF compute_gate THEN do_gating;

set_vars_ptrs_base( 0 );                                   &restore&
IF tdr_mode THEN  set_dc_elec_length;
ASSEMBLE( MOVE num_fpts, R7; MOVE.L dp_scr_array_time, R13 );
ary_elec_length;

IF compute_xform  THEN  do_time_domain;
                     & will need to make # pts same for output&
IF tdr_mode THEN
    dp_scr_array_freq := dp_scr_array_freq - 6;

set_vars_ptrs_base( 0 );
ASSEMBLE( MOVE.L dp_scr_array_freq, R13 );
REPEAT num_tpts DO
   BEGIN
   ASSEMBLE( MOVE.L  (R13)+, R0;
             MOVE.W  (R13)+, R1;
             MOVE.L  R13,-(S);
             MOVE.L  dp_format_sw(R12),R10;
             JSR     (R10);
             MOVE.L  (S)+, R13           );
   END;
```

```
      flag := 0;
      release_mem( td_scr_arrays_id );
      END
   ELSE
      warn( exceeded_available_memory );

END ary_datap;
END$
```

```
     ASMB,L
        HED fft routines
        NAM fft,7
*    UNL
*                    WARNING uses all registers ( or most )
R0   REG 0           usually  A mantissa
R1   REG 1           usually  A exp
R2   REG 2           usually  B mantissa
R3   REG 3           usually  B exp
R4   REG 4           scratch  ( was used in fst_trig )
ang  REG 5           angle value
R6   REG 6           Inner loop counter     master value in  2(S)
R7   REG 7           Outer loop counter     master value  in 8(S)
R8   REG 8
R10  REG 10          scratch ( was used in fst_trig )
aptr REG 9           ptr to   A (first ) data value
bptr REG 8           ptr to   B (second) data value
R11  REG 11          scratch
dang REG 12          angle delta
R13  REG 13          temp
S    REG 15
*                    STACK
*              0     seperation between A,B data in outer loop ( bytes )
*              2     seperation between A,B data in outer loop(data pts)
*              4     Intial data array address  -- 32 bit
*              8     Inner loop counter
*              10    Intial sin_cos array address -- 32 bit
*
* Uses the In-place decimation in freq with natural order twiddles.
*    see BRIGHAM (1974) fig 11-4c or OPPEHHEIM/SCHAFFER (1975) fig 6.15
* An outer loop starts at 1 increasing to 1/2 FFT size, with
*    an inner loop starting at 1/2 FFT size decresing to 1
* Basic buuterfly is  A,B inputs
*                     A+B, (A-B)*W  outputs      ( W is the twiddle )
*
 ENT fft
 ENT ifft
 EXT fst_trig
 EXT fft_size
 EXT ADDE
 EXT SBRE
 EXT MPYE
 EXT preempt
 EXT trig_tbl      & look up tables &
```

```
*EJECT                                      these set the FFT size
cpxsz   EQU 6
ifft  MOVE  =H0800, R3        positive angle delta
      BRA     ffts
fft   MOVE  =HF800, R3        negative angle delta
ffts EQU *
   CLR.L           -(S)          CLEAR INIT ANGLE
   MOVE.W  #1,     -(S)          OUTER LOOP INIT VALUE
   MOVE.L  R0,     -(S)          ADR OF DATA ARRAY
   MOVE fft_size,  R1
   SUBQ    #1,     R1
   ASR     R1,     R3            scale angle increment
   MOVE.W  R3,   dang
   MOVE.W  #1,     R2
   ASL.W   R1,     R2            compute fft size/2
   MOVE.W  R2,     -(S)          INNER LOOP INIT VALUE
   MPY     =D6,    R2
   MOVE.W  R2,     -(S)          DATA ADRDELTA
*
```

```
*EJECT          start new inner/outer loop pass
*
FFT0 MOVE.L 4(S),    aptr              INIT LOWER ADRPTR
     MOVE.L aptr,    bptr
     ADDA.W   (S),   bptr              INIT UPPER ADRPTR
     MOVE.W  8(S), R7     INIT OUTER LOOP   progress from 1 to 1/2 size
*
*       outer loop
*
FFT01: MOVE.L 10(S), ang     INIT ANGLE
     MOVE.W  2(S),   R6        INIT INNER LOOP CTR   progress 1/2 size to 1
*
     MOVE.L   (aptr), R0      read A
     MOVE.W  4(aptr), R1
     MOVE.L   (bptr), R2      read B
     MOVE.W  4(bptr), R3
*
     SUB.B    R1, R3
     BGT      algnal
     BEQ      algndl
algnbl EQU *                  R1 (A) > R3 (B)
     NEG.B    R3
     CMP.B    #16, R3
     BLT      algnbl0
     CLR.L    R2
     BRA      algndl
algnbl0 EQU *
     ASR.W    R3, R2          align B
     SWAP     R2
     ASR.W    R3, R2
     SWAP     R2
     BRA      algndl
algnal EQU *                  align A
     ADD.B    R3, R1          make R1 the larger exponent
     CMP.B    #16, R3
     BLT      algnal0
     CLR.L R0
     BRA      algndl
algnal0 EQU *
     ASR.W    R3, R0
     SWAP     R0
     ASR.W    R3, R0
     SWAP     R0
algndl EQU *                  alignments done
     MOVE.L   R0, R3          save a copy of A
*
     ADD.W    R2, R0          add Br to Ar
     BVS      rpovfl
     SUB.W    R2, R3          sub Br from Ar
     BVS      rmovfl
     SWAP     R2
     SWAP     R3
     SWAP     R0
     ADD.W    R2, R0          add Bi to Ai
     BVS      ipovfl
     SUB.W    R2, R3          sub Bi from Ai
     BVS      imovfl
adddonel EQU *
     SWAP     R3
```

```
    SWAP     R0
store1    EQU *
    MOVE.L   R0, (aptr)+      store A + B
    MOVE.W   R1, (aptr)+
    MOVE.L   R3, (bptr)+      store A - B
    MOVE.W   R1, (bptr)+
*
    SUB.W #1,  R6            DECR INNER LOOP      if zero finished with inner
    BGT    FFT6                                   if postive do more inner
*
*            finished with inner loop
*
    ADDQ.L  #cpxsz, aptr                        inc A (first) data ptr
    ADDQ.L  #cpxsz, bptr                        inc B (second) data ptr
    SUB.W  #1,      R7           DECR OUTER LOOP
    BGT    FFT01
*
*            finished with outer loop and inner loop=1 therefore done!
*
    ADDA.W  #14, S
    RTS
*
rpovfl EQU *
    ASR.W  #1, R0
    EORI =H8000, R0            correct sum
    SUB.W  R2, R3              sub Br from Ar
    ASR.W  #1, R3             overflow not possible
rovfl  EQU *
    SWAP     R2.
    SWAP     R3
    SWAP     R0
    ASR.W   #1, R0
    ASR.W   #1, R2
    ASR.W   #1, R3
    ADD.W   R2, R0
    SUB.W   R2, R3
    ADD.B   #1, R1
    BVC adddone1
    MOVE.W =H7F, R1            exponent overflow
    BRA adddone1
*
rmovfl EQU *
    ASR.W   #1, R3
    EORI =H8000, R3            correct subtraction
    ASR.W   #1, R0
    BRA   rovfl
*
ipovfl EQU *
    ASR.W  #1, R0
    EORI  =H8000, R0           correct sum
    SUB.W  R2, R3
    ASR.W  #1, R3             overflow not possible
iovfl  EQU *
    SWAP R0
    SWAP R3
    ASR.W   #1, R0
    ASR.W   #1, R3
    ADD.B   #1, R1
    BVC store1
```

```
        MOVE.W =H7F, R1
        BRA store1
*
imovf1 EQU *
        ASR.W  #1, R3
        EORI =H8000, R3          correct subtraction
        ASR.W  #1, R0
        BRA iovf1
*
rpovf2 EQU *
        ASR.W  #1, R0
        EORI =H8000, R0          correct sum
        SUB.W  R2, R3            sub Br from Ar
        ASR.W  #1, R3            overflow not possible
rovf2   EQU *
        SWAP   R2
        SWAP   R3
        SWAP   R0
        ASR.W  #1, R2
        ASR.W  #1, R3
        ASR.W  #1, R0
        ADD.W  R2, R0
        SUB.W  R2, R3
        ADD.B  #1, R1
        BVC adddone2
        MOVE.W =H7F, R1          exponent overflow
        BRA adddone2
*
rmovf2 EQU *
        ASR.W  #1, R3
        EORI =H8000, R3          correct subtraction
        ASR.W  #1, R0
        BRA   rovf2
*
ipovf2 EQU *
        ASR.W  #1, R0
        EORI =H8000, R0          corect sum
        SUB.W  R2, R3
        ASR.W  #1, R3
iovf2   EQU *
        SWAP R0
        SWAP R3
        ASR.W  #1, R0
        ASR.W  #1, R3
        ADD.B  #1, R1
        BVC store2
        MOVE.W =H7F, R1
        BRA store2
*
imovf2 EQU *
        ASR.W  #1, R3
        EORI =H8000, R3
        ASR.W  #1, R0
        BRA iovf2
*
```

```
*EJECT      inner loop    enter
*
FFT6 EQU    *
    MOVE.L   (aptr), R0        read A
    MOVE.W   4(aptr), R1
    MOVE.L   (bptr), R2        read B
    MOVE.W   4(bptr), R3
*
    SUB.B    R1, R3
    BGT      algna2
    BEQ      algnd2
algnb2 EQU  *                  R1 (A) > R3 (B)
    NEG.B    R3
    CMP.B    #16, R3
    BLT      algnb20
    CLR.L    R2
    BRA      algnd2
algnb20 EQU *
    ASR.W    R3, R2            align B
    SWAP     R2
    ASR.W    R3, R2
    SWAP     R2
    BRA      algnd2
algna2 EQU  *                  align A
    ADD.B    R3, R1            make R1 the larger exponent
    CMP.B    #16, R3
    BLT      algna20
    CLR.L R0
    BRA      algnd2
algna20 EQU *
    ASR.W    R3, R0
    SWAP     R0
    ASR.W    R3, R0
    SWAP     R0
algnd2 EQU  *                  alignments done
    MOVE.L   R0, R3            save a copy of A
*
    ADD.W    R2, R0            add Br to Ar
    BVS      rpovf2
    SUB.W    R2, R3            sub Br from Ar
    BVS      rmovf2
    SWAP     R2
    SWAP     R3
    SWAP     R0
    ADD.W    R2, R0            add Bi to Ai
    BVS      ipovf2
    SUB.W    R2, R3            sub Bi from Ai
    BVS      imovf2
adddone2 EQU *
    SWAP     R3
    SWAP     R0
store2    EQU *
    MOVE.L   R0, (aptr)+       store A + B
    MOVE.W   R1, (aptr)+
*
    ADD   dang, ang            increment angle
    MOVE  ang,  R4
    AND   =H3FE, R4
    BNE   fft61
```

```
*
     BTST #10, ang            mpy by w(0) or w(90)
     BEQ   fft59
     SWAP  R3                 mpy by w(90)
     NEG   R3
     BVC   fft59
     MOVE =H7FFF, R3          +1 overflow
fft59 EQU *
     BTST #11, ang
     BEQ fft66
     NEG   R3
     BVC fft591
     MOVE =H7FFF, R3
fft591 EQU *
     SWAP  R3
     NEG   R3
     BVC fft592
     MOVE =H7FFF, R3
fft592 EQU *
     SWAP  R3
     BRA fft66
*
fft61 EQU *
     LEA    trig_tbl.L, R10
     MOVE  0(R10,R4.W), R2    sin
     BGE   fft62
     MOVE =H7FFF, R2          +1 substitute
fft62 EQU *
     NEG   R4
     AND  =H3FE, R4
     MOVE  0(R10,R4.W), R0    cos
     BGE fft621
     MOVE =H7FFF, R0          +1 substitute
fft621 EQU *
     BTST   #10, ang
     BEQ    fft63
     NEG    R2                90 - 180
     EXG    R2, R0
fft63 EQU *
     BTST   #11, ang
     BEQ    fft64
     NEG    R2                180 - 360
     NEG    R0
fft64 EQU *
     MOVE.L R3, R4            duplicate ( A-B)
     MPY    R0, R3            real*cos
     MOVE.L R3, R11           temp save
     SWAP   R4
     MPY    R4, R0            imag*cos
     MOVE   R4, R3
     MPY    R2, R3            imag*sin
     SWAP   R4
     MPY    R4, R2            real*sin
     ADD.L  R2, R0            imag part
     SUB.L  R3, R11           real part
     MOVE.L R11, R3
     ADD.L  R0, R0            normalize a maximum of one time
     BVS    mpyovfi
     ADD.L  R3, R3
```

```
      BVS      mpyovfr
mpydone EQU *
      SWAP     R3
      MOVE     R3, R0
      MOVE.L R0, R3
*
fft66 EQU *
      MOVE.L R3, (bptr)+        STORE (A - B)*W
      MOVE.W R1, (bptr)+
*
      SUB.W  #1,    R6          DECR INNER LOOP
      BGT     FFT6              loop back if more
      SUB.W  #1,    R7          DECR OUTER LOOP
      BLE     FFT9                 or both inner and outer loop finished?
      MOVE.L bptr,  aptr        INIT ADR PTRS  -- more to do on outer
      ADDA.W (S),   bptr
      BRA     FFT01
*
* inner loop and outer loop finished __ set up new loop conditions
*
FFT9 LSL.W 8(S)                 OUTER LOOP DOUBLED
      ASR.W   2(S)              INNER LOOP HALVED
      ASR.W   (S)               ADR DELTA HALVED
      ADD   dang,  dang         ANGLE DELTA DOUBLED
*     MOVE  dang, -(S)
*     JSR   preempt.L
*     MOVE  (S)+, dang
      BRA       FFT0
*
mpyovfi EQU *
      ASR.L  #1, R0
      BCHG   #31, R0
      BRA    mpyovf
mpyovfr EQU *
      ASR.L  #1, R3
      BCHG  #31, R3
      ASR.L  #1, R0
mpyovf EQU *
      ADDQ.B  #1, R1
      BVC    mpydone
      MOVEQ =H7F, R1            exponent overflow
      BRA    mpydone
*
*
*
*
```

```
*EJECT              unpack bit-reversing routine see Rabiner/Gold(1975)  p365
 ENT fftun                                    or Oppenheim/Schafer(1975) p316
fftun EQU *
 MOVE.L R0,        R10           R10  has start adr  for data array
 MOVE.W fft_size,  R3
 LEA   bit_test,   R13
 MPY   =D-6,       R3            scale fft size by branch increments
 LEA 72(R13,R3.W), R13           branch point into bit reverse counter
 MOVE.L R10,       bptr          bptr has destination adr for data array
 MOVE.L R10,       aptr          aptr  has source adr for data array
 CLR.W  R0                       R0  will be item index
*
loop EQU *
 CMP.L aptr,       bptr
 BGT   swap
 ADDQ.L #cpxsz, aptr
 JMP   (R13)
*
swap EQU *
 MOVE.L (aptr),  R1
 MOVE.L (bptr),  (aptr)+
 MOVE.L R1,      (bptr)+
 MOVE.W (aptr),  R1
 MOVE.W (bptr),  (aptr)+
 MOVE.W R1,      (bptr)+
 JMP   (R13)
*
bit_test EQU *
 BCHG   #12,  R0
 BEQ     bit_rev
 BCHG   #11,  R0          Note: R0 is actually 2*index
 BEQ     bit_rev          Note: The above branch size calculation relies
 BCHG   #10,  R0                on these being 6 bytes each
 BEQ     bit_rev
 BCHG   #9,   R0
 BEQ     bit_rev
 BCHG   #8,   R0
 BEQ     bit_rev
 BCHG   #7,   R0
.BEQ     bit_rev
 BCHG   #6,   R0
 BEQ     bit_rev
 BCHG   #5,   R0
 BEQ     bit_rev
 BCHG   #4,   R0
 BEQ     bit_rev
 BCHG   #3,   R0
 BEQ     bit_rev
 BCHG   #2,   R0
 BEQ     bit_rev
 BCHG   #1,   R0
 BEQ     bit_rev
 JSR   preempt.L          release the processor for higher priotority use
 RTS
*
bit_rev MOVE.W R0, R1
 ADD.W R1, R1
 ADD.W R0, R1            mpy by 3 to get byte index
 LEA   0(R10,R1.W), bptr
```

```
    BRA    loop
*
    END
```

```
& print the auxiliary string -- may be blank &
& active_title does some special formatting itself &
IF NOT title_actf THEN
    BEGIN   & not a title or label function &
       IF units = 6 AND NOT rpg_marker THEN
          BEGIN & if &           & seconds -- add distance readout &
             active_fcn_real := REAL(act_fcn_val  -
                                       adj_if_delta_mkr )
                    * speed_of_light
                    * e_ch_real( ch_velocity_factor );
             active_fcn_real := active_fcn_real*unscale_multiplier;
             app_str( fmt_real( active_fcn_real,
                                     e_aux,
                                     fmt_tbl[
                                                  distance_format
                                                  ]
                                  ),
                             suffix[ distance_suffix ] );
          END;   & if &
```

FIG 1

# MEASUREMENT BLOCK DIAGRAM (FAULT-LOCATION)

SPLITTER/COMBINER

ANALYZER 12

**FIG 2**

EP 0 325 435 A2

# FAULT—LOCATION MEASUREMENT

**FIG 3**

EP 0 325 435 A2

FREQUENCY
DOMAIN

TIME (Distance)
DOMAIN

$$\mathcal{F}^{-1}$$

RIPPLE PATTERN
INFORMATION

TIME DELAY OR
POSITION/LENGTH
INFORMATION

# FIG 4

OPTICAL FIBER

REFLECTED SIGNAL

LENGTH $(L_x)$

REFLECTED SIGNAL PATH LENGTH $= 2L_x$

**FIG 5**

EP 0 325 435 A2

CH1 MEM   log  MAG       5  dB/    REF  0  dB

REF  0dB

-10dB

-20dB

-30dB

-40dB

-50 dB

CH1 START       1. 000   000   MHz       STOP  1  601.000   000 MHz

FIG  6A

CH2 MEM     log  MAG      5 dB/    REF  0 dB

FIG 6B

EP 0 325 435 A2

## OPTICAL FREQUENCY DOMAIN REFLECTOMETRY

32 ── | CONNECT MEASUREMENT SYSTEM |

34 ── | SET SWEEP PARAMETERS:<br>START & STOP FREQUENCIES, SWEEP TIME,<br>NUMBER OF POINTS, RF SOURCE POWER |

36 ── | SET VELOCITY FACTOR OR INDEX OF REFRACTION<br>FOR MEDIUM OF DEVICE UNDER TEST |

38 ── | MEASURE REFLECTION FROM DEVICE UNDER TEST<br>IN FREQUENCY DOMAIN |

40 ── | PERFORM INVERSE FOURIER TRANSFORM OF<br>FREQUENCY DOMAIN REFLECTION MEASUREMENT |

42 ── | CALCULATE DISTANCE FROM TIME TO LOCATE<br>DISCONTINUITIES IN DEVICE UNDER TEST |

# FIG 7